# EUROPÄISCHE PATENTSCHRIFT

(11) **EP 3 025 458 B1**
(45) Veröffentlichungstag und Bekanntmachung des Hinweises auf die Patenterteilung: **09.08.2017**
(21) Anmeldenummer: 14730110.5
(22) Anmeldetag: 02.06.2014
(51) Int. Cl.: H04L 12/24, H04L 12/40, H04L 29/08

(54) **FELDBUSZUGRIFFSEINHEIT UND VERFAHREN ZUM BETREIBEN DERSELBEN**
FIELDBUS ACCESS UNIT, AND METHOD FOR THE OPERATION THEREOF
UNITÉ D'ACCÈS À UN BUS DE TERRAIN POUR L'EXPLOITATION DUDIT BUS

(30) Priorität: 24.07.2013 DE 102013107905
(43) Veröffentlichungstag der Anmeldung: 01.06.2016
(73) Patentinhaber: Endress+Hauser Process Solutions AG, 4153 Reinach (CH)
(72) Erfinder: KÖLBLIN, Robert, 79539 Lörrach (DE); DEUSER, Thorsten, 74214 Schöntal (DE); GRINER, Stefan, CH-4415 Lausen (CH); DE GROOT, Vincent, F-68300 St. Louis (FR); DÖBELE, Thomas Fridolin, 79713 Bad Säckingen (DE)
(74) Vertreter: Andres, Angelika Maria
(86) Internationale Anmeldenummer: PCT/EP2014/061373
(87) Internationale Veröffentlichungsnummer: WO 2015/010815

(56) Entgegenhaltungen:
- EP-A1- 1 701 472
- DE-A1-102009 045 055

## Beschreibung

Die Erfindung bezieht sich auf eine Feldbuszugriffseinheit und auf ein Verfahren zum Betreiben einer Feldbuszugriffseinheit.

Derartige Feldbuszugriffseinheiten sind aus dem Stand der Technik bspw. aus der Offenlegungsschrift DE 102009046041 A1 bekannt geworden. Diese Feldbuszugriffseinheiten sind u.a. in der Lage eine auf dem Feldbus stattfindende Kommunikation mitzuhören, ohne selbst an der Kommunikation über den Feldbus teilzunehmen.

Ebenso ist aus der Offenlegungsschrift DE 102005063053 A1 eine Feldbuszugriffseinheit bekannt geworden, bei der der Datenverkehr über den Feldbus mitgehört wird und im Fall eines Diagnoseereignisses weitere Diagnoseinformationen von dem betreffenden Feldgerät angefordert werden. Die dort gezeigte und als Gateway bezeichnete Feldbuszugriffseinheit ist neben dem Feldbus mit einer Rechnereinheit verbunden, die zum Beobachten von Feldgeräten auf dem Feldbus dient.

Aus der Offenlegungsschrift DE 102008019053 A1 ist eine vergleichbare Feldbuszugriffseinheit, dort ebenfalls als Gateway bezeichnet, bekannt geworden, welche zwar den Datenverkehr auf dem Feldbus abhört jedoch nicht sämtliche auf dem Feldbus ausgetauschten Daten sondern nur als Nutzdaten bezeichneten Daten, bspw. nur von einem bestimmten Absender stammende Daten, entsprechend dem Protokoll eines zweiten Netzwerksystems an eine übergeordnete Einheit überträgt. Dabei ist insbesondere vorgesehen, dass für wenigstens ein Feldgerät zugehörige Informationen zur Geräteintegration dieses Feldgerätes, insbesondere eine GSD gespeichert sind. Solche Informationen zur Geräteintegration umfassen dabei vorzugsweise Informationen bezüglich der Kommunikationseigenschaften etc. Diese GSDs können von einem Anwender von (jeglicher) datenverarbeitenden Einheit, die einen Webbrowser aufweist, über den Webserver des Gateways in das Gateway geladen werden. Ferner stellt das Gateway einem Anwender über einen Webserver eine Liste von Feldgeräten bereit, deren zugehörige GSDs in dem Gateway gespeichert sind.

Weitere Feldbuszugriffseinheiten für das passive Mithören von Bussignalen sind aus den Offenlegungsschriften DE102009045055 A1 und EP1701472 A1, sowie für die passive Zustandsüberwachung aus DE102009045386 A1 und WO2012065808 A1 bekannt.

Dabei ist jedoch nachteilig, dass der Anwender selbst aktiv werden muss, und die benötigten Informationen in Form von Dateien auf der Feldbuszugriffseinheit hinterlegen muss.

Der Erfindung liegt somit die Aufgabe zugrunde, die erforderlichen Feldgeräteinformationen zur Auswertung des Datenverkehrs auf dem Feldbus automatisiert bereit zu stellen.

Die Aufgabe wird durch ein Verfahren und eine Feldbuszugriffseinheit gelöst. Hinsichtlich des Verfahrens wird die Aufgabe durch ein Verfahren zum Betreiben einer Feldbuszugriffseinheit gelöst, wobei über einen Feldbus übertragene Telegramme von der Zugriffseinheit mitgehört werden, insbesondere ohne dass die Zugriffseinheit an einer Datenübertragung über den Feldbus teilnimmt, wobei die zur Interpretation der mitgehörten Telegramme erforderlichen Feldgeräteinformationen anhand von in den Telegrammen enthaltenen Identifikationsdaten von einer übergeordneten Einheit abgerufen werden.

Unter Interpretation wird dabei eine Auswertung der Telegramme hinsichtlich ihres Inhalts, insbesondere die Zuordnung von in den Telegrammen enthaltenen Zahlencodes zu bestimmten Zuständen des Feldgerätes etc. verstanden.

Von Vorteil ist ferner, dass bspw. nach dem Anschließen einer Zugriffseinheit an einen Feldbus über den Feldgeräte kommunizieren, eben keine Konfiguration durch einen Anwender mehr erfolgen muss, sondern die Konfiguration automatisch erfolgen kann, indem, wie vorgeschlagen, die benötigten Feldgeräteinformationen anhand von Identifikationsdaten von einer übergeordneten Einheit abgerufen werden.

In einer Ausführungsform des Verfahrens handelt es sich bei den erforderlichen Feldgeräteinformationen um Gerätestammdaten, wobei es sich bei der übergeordneten Einheit um einen Server handelt, der über eine Sammlung von Dateien verfügt, die die erforderlichen Feldgeräteinformationen enthalten, und wobei die Gerätestammdaten über eine Internetverbindung der Feldbuszugriffseinheit abgerufen werden. Insbesondere kann es sich bei den Feldgeräteinformationen um die in einer sog. GSD, d.h. einer Geräte-Stammdaten-Datei, oder zumindest einen Teil der darin enthaltenen Informationen handeln.

In einer weiteren Ausführungsform des Verfahrens handelt es sich bei der übergeordneten Einheit um eine Anwendung auf einer Rechnereinheit, welche Anwendung über die erforderlichen Feldgeräteinformationen verfügt und wobei die erforderlichen Feldgeräteinformationen von der Anwendung über eine Kommunikationsverbindung zwischen der Feldbuszugriffseinheit und der Anwendung abgerufen werden. Bei der Anwendung kann es sich bspw. um das von der Anmelderin vertriebene Programm FieldCare handeln.

In einer weiteren Ausführungsform des Verfahrens handelt es sich bei den erforderlichen Feldgeräteinformationen um Gerätestammdaten.

In einer weiteren Ausführungsform des Verfahrens werden die erforderlichen Feldgeräteinformationen in einer Speichereinheit der Feldbuszugriffseinheit gespeichert.

In einer weiteren Ausführungsform des Verfahrens wird ein Abgleich der vorliegenden Version der erforderlichen Feldgeräteinformationen vermittels der Feldbuszugriffseinheit durchgeführt, wenn eine Internetverbindung und/oder eine Kommunikationsverbindung mit einer Anwendung besteht.

In einer weiteren Ausführungsform des Verfahrens enthält wenigstens eines der abgehörten Telegramme Diagnoseinformationen, und wobei die erforderlichen Feldgeräteinformationen zur Interpretation der Diagnosedaten dienen.

In einer weiteren Ausführungsform des Verfahrens liegen die Diagnoseinformationen in den Telegrammen in Form von Bitstrings vor.

Vermittels der von der Feldbuszugriffseinheit erlangten Feldgeräteinformationen können diese Bitstrings nun interpretiert, d.h. ausgewertet werden und entsprechende Diagnosemeldungen in Klartext vermittels der Feldbuszugriffseinheit dargestellt werden.

In einer weiteren Ausführungsform des Verfahrens werden die erforderlichen Feldgeräteinformationen, die für den vorliegenden Feldbusprotokollstandard benötigt werden, aus einer zu wenigstens einem Feldgerät zugeordneten DTM, vorzugsweise vermittels der Feldbuszugriffseinheit, extrahiert.

Entsprechende Verfahren sind aus dem Stand der Technik bekannt geworden, vgl. bspw. PROFIBUS Geräteintegration.

Hinsichtlich der Feldbuszugriffseinheit wird die Aufgabe durch eine Feldbuszugriffseinheit zur Durchführung des Verfahrens nach einem der genannten Ausführungsformen gelöst. Eine entsprechende Feldbuszugriffseinheit kann bspw. einen Speicher und eine Recheneinheit aufweisen, die zum Umsetzen des Verfahrens dienen. Das Verfahren kann bspw. vermittels Programmcodemitteln in der Speichereinheit bzw. der Feldbuszugriffseinheit hinterlegt sein. Bei den Programmcodemitteln kann es sich um eine Programmiersprache oder um eine maschinenlesbare Sprache handeln.

Die Erfindung wird anhand der nachfolgenden Zeichnungen näher erläutert. Es zeigt:

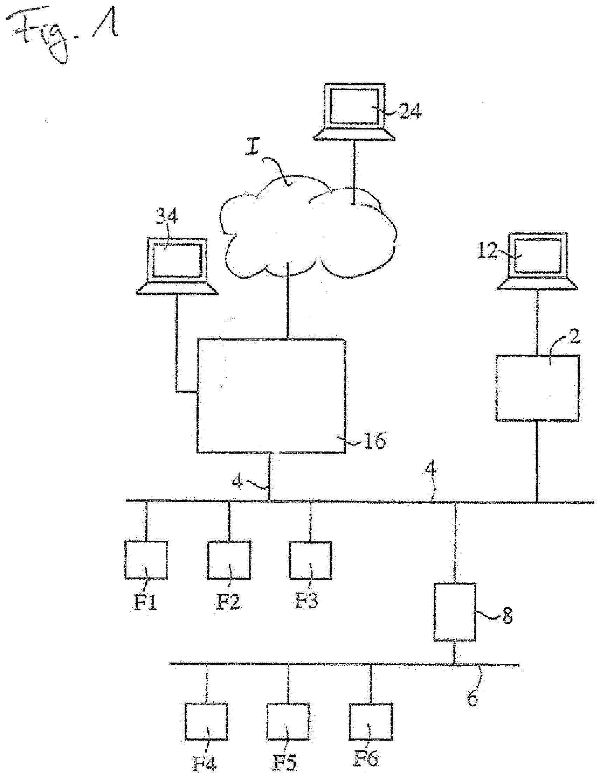

Fig. 1: zeigt eine schematische Darstellung einer Anlage der Prozessautomatisierungstechnik zur Veranschaulichung des erfindungsgemäßen Verfahrens.

Figur 1 zeigt eine SPS 2, die über ein erstes Netzwerksystem 4 mit drei Feldgeräten F1, F2 und F3 verbunden ist. Das erste Netzwerksystem 4 wird bspw. durch ein Profibus DP Netzwerksystem gebildet. Ferner ist an dem ersten Netzwerksystem 4 über einen Segment-Koppler 8 ein weiteres Netzwerksystem 6, das bspw. durch ein Profibus PA Netzwerksystem gebildet wird, angeschlossen. An dem weiteren Netzwerksystem 6 sind drei Feldgeräte F4, F5 und F6 angeschlossen. Die SPS 2 ist ein Master der Klasse 1. In Bezug auf die Feldgeräte F1-F6 führt sie eine Prozesssteuerung aus und kommuniziert mit diesen im Rahmen eines zyklischen Datenverkehrs. Beispielsweise fordert sie von Feldgeräten, die Sensoren bilden, Messwerte an und gibt in Abhängigkeit davon Steuerungsbefehle an Feldgeräte, die Aktoren bilden, aus. An der SPS 2 ist ferner eine Rechnereinheit 12 angeschlossen, die zur Bedienung der SPS 2 und zur Visualisierung von Daten bezüglich der ausgeführten Prozesssteuerung dient.

Ferner ist eine erste und eine zweite übergeordnete Einheit 34, 24 vorgesehen. Um Informationen, die im Rahmen der Prozesssteuerung zwischen der SPS 2 und einem oder mehreren der Feldgeräte F1-F6 ausgetauscht werden, auch an die erste und/oder zweite übergeordnete Einheit 34, 24 bereitzustellen, ist die erste und die zweite übergeordnete Einheit 34, 24 über eine Feldbuszugriffsstelle 16 mit dem ersten Netzwerksystem 4 verbunden. Die erste und die zweite übergeordnete Einheit 34, 24 und das Feldbuszugriffsstelle 16 sind über ein zweites Netzwerksystem verbunden. Die erste übergeordnete Einheit 34 kann dabei bspw. über ein LAN mit der Feldbusbuszugriffsstelle verbunden sein, während die zweite übergeordnete Einheit über das Internet mit der Feldbuszugriffsstelle verbunden ist.

Es können wie im Ausführungsbeispiel in Figur 1 zwei übergeordnete Einheiten vorgesehen sein oder es kann auch nur eine der beiden übergeordneten Einheiten zumindest zeitweise mit der Feldbuszugriffsstelle verbunden sein.

Bei der zweiten übergeordneten Einheit 24 kann es sich um einen Webserver handeln, der über die benötigten Feldgeräteinformationen verfügt und diese über das Internet I an die Feldbuszugriffsstelle 16 übertragen kann.

Im Folgenden wird eine erste Ausführungsform des erfindungsgemäßen Verfahrens beschrieben. Die Feldbuszugriffseinheit 16 wird, bspw. nach dem Anschließen der Feldbuszugriffseinheit 16 an den Feldbus 4, in einem Abhör-Modus betrieben, in dem es sämtliche oder auch nur ausgewählte Nachrichten, d.h. Nachrichten eines bestimmten Typs oder eines bestimmten Absenders, die zwischen der SPS 2 und den Feldgeräten F1-F6 im Rahmen der Prozesssteuerung ausgetauscht werden, abhört.

In der Feldbuszugriffseinheit 16 werden diese Nachrichten die bspw. in Form von Telegrammen vorliegen, dann hinsichtlich bspw. einer Geräteidentifikationsnummer untersucht. Eine derartige Geräteidentifikationsnummer die bspw. den Gerätehersteller und den Gerätetyp angibt ist bspw. in dem HART Protokoll in dem als Adressbit bezeichneten Teil des Telegramms hinterlegt, vgl. http://bhmea.bh.funpic.de/files JG5/PRT/download/feldbus is V38-1295534911.pdf - Telegrammaufbau. Damit besitzt jedes Gerät eine eindeutige und von dem Anwender nicht veränderbare Adresse.

Ähnliche und von der Bestimmung gleiche Identifikationsnummern werden auch in den Protokollen Profibus und Foundation Fieldbus verwendet.

Anhand der Identifikationsdaten werden dann Feldgeräteinformationen von der übergeordneten Einheit 34 oder 24 abgerufen.

Bspw. können Daten über eine LAN-Verbindung zwischen der Feldbuszugriffseinheit 16 und der als Rechnereinheit ausgestalteten übergeordneten Einheit 34 ausgetauscht werden. Über eine solche Verbindung können dann sowohl die Identifikationsdaten an die übergeordneten Einheit 34 als auch die Feldgeräteinformationen von der übergeordneten Einheit 34 an die Feldbuszugriffseinheit 16 übertragen werden. Diese Datenübertragung kann allerdings nur dann stattfinden, wenn die übergeordnete Einheit 34 mit der Feldbuszugriffseinheit 16, bspw. über eine vor Ort Kommunikationsschnittstelle an der Feldbuszugriffseinheit 16, verbunden ist und die Feldgeräteinformationen vermittels der übergeordneten Einheit 34 zugänglich sind, bspw. wenn dort eine Anwendung zur Bedienung eines oder mehrerer Feldgeräte vorhanden ist.

Andererseits kann auch der Fall vorgesehen sein, dass die Feldbuszugriffsfeinheit über das Internet mit der übergeordneten Einheit 24 verbunden ist. Dabei kann die übergeordnete Einheit 24 bspw. als Server ausgestaltet sein. Auf dem Server kann eine umfangreiche Sammlung von Feldgerätebeschreibungen oder eben von den benötigten Feldgeräteinformationen vorliegen, die vermittels der Identifikationsdaten eines Feldgerätes F1-F6 abgerufen werden können. Dafür kann ein Client auf der Feldbuszugriffseinheit 16 vorgesehen sein, der entsprechende Anfragen an den Server, vorzugsweise über das Internet I oder eine das Internet I umfassende Verbindung, stellt.

Die Feldgeräteinformationen können entweder vermittels der übergeordneten Einheit 34, 24 aus einer Gerätebeschreibung wie bspw. einem DTM oder einer DD extrahiert werden oder aber diese Gerätebeschreibung an die Feldbuszugriffseinheit 16 über die entsprechende Verbindung übertragen und von bzw. auf der Feldbuszugriffseinheit 16 aus der Gerätebeschreibung extrahiert werden.

### Bezugszeichenliste

- 34: Erste übergeordnete Einheit
- 24: Zweite übergeordnete Einheit
- I: Internet
- 16: Feldbuszugriffsstelle
- 4: Erstes Netzwerksystem
- 6: Zweites Netzwerksystem
- F1-F3: Feldgeräte am ersten Netzwerksystem
- F4-F6: Feldgerätes am zweiten Netzwerksystem
- 12: Speicherprogrammierbare Steuerung SPS
- 2: Rechnereinheit
- 8: Segment-Koppler

## Patentansprüche

1. Verfahren zum Betreiben einer Feldbuszugriffseinheit (16),
wobei über einen Feldbus (4, 6), über welchen Feldgeräte kommunizieren, übertragene Telegramme von der Zugriffseinheit (16) mitgehört werden, insbesondere ohne dass die Zugriffseinheit (16) an einer Datenübertragung über den Feldbus (4, 6) teilnimmt, **dadurch gekennzeichnet, dass** die zur Interpretation der mitgehörten Telegramme erforderlichen Feldgeräteinformationen anhand von in den Telegrammen enthaltenen Identifikationsdaten von einer übergeordneten Einheit (34, 24) abgerufen werden, und
wobei die Interpretation der Telegramme eine Auswertung der Telegramme hinsichtlich einer Zuordnung von in den Telegrammen enthaltenen Zahlencodes zu bestimmten Zuständen eines Feldgeräts umfasst.

2. Verfahren nach dem vorherigen Anspruch,
wobei es sich bei den erforderlichen Feldgeräteinformationen um Gerätestammdaten handelt,
wobei es sich bei der übergeordneten Einheit (24) um einen Server handelt, der über eine Sammlung von Dateien verfügt, die die erforderlichen Feldgeräteinformationen enthalten,
und wobei die Gerätestammdaten über eine lnternetverbindung der Feldbuszugriffseinheit (16) abgerufen werden.

3. Verfahren nach einem der vorherigen Ansprüche,
wobei es sich bei der übergeordneten Einheit (34) um eine Anwendung auf einer Rechnereinheit handelt, welche Anwendung über die erforderlichen Feldgeräteinformationen verfügt und
wobei die erforderlichen Feldgeräteinformationen von der Anwendung über eine Kommunikationsverbindung zwischen der Feldbuszugriffseinheit (16) und der Anwendung abgerufen werden.

4. Verfahren nach einem der vorherigen Ansprüche,
wobei es sich bei den erforderlichen Feldgeräteinformationen um Gerätestammdaten handelt.

5. Verfahren nach einem der vorherigen Ansprüche,
wobei die erforderlichen Feldgeräteinformationen in einer Speichereinheit der Feldbuszugriffseinheit (16) gespeichert werden.

6. Verfahren nach einem der vorherigen Ansprüche,
wobei ein Abgleich der vorliegenden Version der erforderlichen Feldgeräteinformationen vermittels der Feldbuszugriffseinheit (16) durchgeführt wird, wenn eine Internetverbindung und/oder eine Kommunikationsverbindung mit einer Anwendung besteht.

7. Verfahren nach einem der vorherigen Ansprüche,
wobei wenigstens eines der abgehörten Telegramme Diagnoseinformationen enthält, und wobei die erforderlichen Feldgeräteinformationen zur Interpretation der Diagnosedaten dienen.

8. Verfahren nach einem der vorherigen Ansprüche,
wobei die Diagnoseinformationen in den Telegrammen in Form von Bitstrings vorliegen.

9. Verfahren nach einem der vorherigen Ansprüche,
wobei die erforderlichen Feldgeräteinformationen, die für den vorliegenden Feldbusprotokollstandard benötigt werden, aus einer zu wenigstens einem Feldgerät (F1-F6) zugeordneten DTM, vorzugsweise vermittels der Feldbuszugriffseinheit (16), extrahiert werden.

10. Feldbuszugriffseinheit (16) zur Durchführung des Verfahrens nach einem der vorherigen Ansprüche.

## Claims

1. Procedure for operating a fieldbus access unit (16), wherein an access unit (16) listens to telegrams transmitted via a fieldbus (4, 6), via which field devices communicate, particularly without the access unit (16) participating in data transmission via the fieldbus (4, 6),
**characterized in that**
the field device information that is required to interpret the telegrams that are listened to is called up by a higher-order unit (34, 24) using identification data contained in the telegrams, and
wherein the interpretation of the telegrams comprises an evaluation of the telegrams with regard to an assignment of numerical codes contained in the telegrams to certain states of a field device.

2. Procedure as claimed in the previous claim,
wherein the necessary field device information comprises device master data, wherein the higher-order unit (24) is a server that has a collection of files containing the necessary field device information,
and wherein the device master data are called up via an Internet connection of the fieldbus access unit (16).

3. Procedure as claimed in one of the previous claims,
wherein the higher-order unit (34) is an application on a computer unit, said application having the necessary field device information, and
wherein the necessary field device information is called up by the application via a communication connection between the field device access unit (16) and the application.

4. Procedure as claimed in one of the previous claims,
wherein the necessary field device information is device master data.

5. Procedure as claimed in one of the previous claims,
wherein the necessary field device information is stored in a memory unit of the fieldbus access unit (16).

6. Procedure as claimed in one of the previous claims,
wherein the present version of the necessary field device information is reconciled using the fieldbus access unit (16) when an Internet connection and/or a communication connection with an application is established.

7. Procedure as claimed in one of the previous claims,
wherein at least one of the telegrams that are listened to contains diagnostic information, and wherein the necessary field device information is used to interpret the diagnostic data.

8. Procedure as claimed in one of the previous claims,
wherein the diagnostic information is provided in the telegrams in the form of bit strings.

9. Procedure as claimed in one of the previous claims,
wherein the necessary field device information that is required for the fieldbus protocol standard present is extracted from a DTM that is assigned to at least one field device (F1-F6), preferably using the field device access unit (16).

10. Field device access unit (16) designed to perform the procedure as claimed in one of the previous claims.

## Revendications

1. Procédé destiné à l'exploitation d'une unité d'accès au bus de terrain (16), pour lequel des télégrammes transmis par l'unité d'accès (16) sont surveillés par l'intermédiaire d'un bus de terrain (4, 6), à travers lequel communiquent des appareils de terrain, notamment sans que l'unité d'accès (16) ne participe à une transmission de données via le bus de terrain (4, 6),
**caractérisé**
**en ce que** les informations d'appareil de terrain nécessaires pour l'interprétation des télégrammes surveillés sont appelées par une unité maître (34, 24) au moyen de données d'identification contenues dans les télégrammes, et
pour lequel l'interprétation des télégrammes englobe une évaluation des télégrammes concernant une attribution de codes numériques contenus dans les télégrammes à différents états d'un appareil de terrain.

2. Procédé selon la revendication précédente,
pour lequel il s'agit de données permanentes d'appareil concernant les nécessaires informations d'appareil de terrain,
pour lequel s'agit, concernant l'unité maître (24), d'un serveur disposant d'un ensemble de fichiers, qui contiennent les nécessaires informations d'appareil de terrain,
et pour lequel les données permanentes d'appareil sont appelées par le biais d'une connexion Internet de l'unité d'accès au bus de terrain (16).

3. Procédé selon l'une des revendications précédentes,
pour lequel il s'agit, concernant l'unité maître (34), d'une application sur une unité d'ordinateur, laquelle application dispose des nécessaires informations d'appareil de terrain et
pour lequel les nécessaires informations d'appareil de terrain sont appelées par l'application par l'intermédiaire d'une liaison de communication entre l'unité d'accès au bus de terrain (16) et l'application.

4. Procédé selon l'une des revendications précédentes,
pour lequel il s'agit de données permanentes d'appareil concernant les nécessaires informations d'appareil de terrain.

5. Procédé selon l'une des revendications précédentes,
pour lequel les nécessaires informations d'appareil de terrain sont enregistrées dans une unité de mémoire de l'unité d'accès au bus de terrain (16).

6. Procédé selon l'une des revendications précédentes,
pour lequel est réalisée, au moyen de l'unité d'accès au bus de terrain (16), une synchronisation de la version présente des informations d'appareil de terrain nécessaires, en présence d'une connexion Internet et/ou d'une liaison de communication avec une application.

7. Procédé selon l'une des revendications précédentes,
pour lequel au moins l'un des télégrammes surveillés contient des informations de diagnostic, et pour lequel les nécessaires informations d'appareil de terrain servent à l'interprétation des données de diagnostic.

8. Procédé selon l'une des revendications précédentes,
pour lequel les informations de diagnostic sont présentes dans les télégrammes sous forme de chaînes de bits.

9. Procédé selon l'une des revendications précédentes,
pour lequel les informations d'appareil de terrain, qui sont nécessaires pour le présent protocole de bus de terrain, sont extraites d'un DTM attribué à au moins un appareil de terrain (F1-F6), de préférence au moyen de l'unité d'accès au bus de terrain (16).

10. Unité d'accès au bus de terrain (16) destinée à l'exécution du procédé selon l'une des revendications précédentes.
